(19) Europäisches Patentamt
European Patent Office
Office européen des brevets

(11) **EP 2 823 467 B1**

(12) **EUROPEAN PATENT SPECIFICATION**

(45) Date of publication and mention
of the grant of the patent:
**15.02.2017 Bulletin 2017/07**

(51) Int Cl.:
***G06T 7/20*** (2017.01)

(21) Application number: **13708767.2**

(86) International application number:
**PCT/EP2013/054165**

(22) Date of filing: **01.03.2013**

(87) International publication number:
**WO 2013/131819 (12.09.2013 Gazette 2013/37)**

(54) **FILTERING A DISPLACEMENT FIELD BETWEEN VIDEO FRAMES**

FILTERUNG EINES VERSCHIEBUNGSFELDES ZWISCHEN VIDEOEINZELBILDERN

FILTRAGE D'UN CHAMP DE DÉPLACEMENT ENTRE DES TRAMES VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2012 EP 12305266**

(43) Date of publication of application:
**14.01.2015 Bulletin 2015/03**

(73) Proprietor: **Thomson Licensing
92130 Issy-les-Moulineaux (FR)**

(72) Inventors:
• **ROBERT, Philippe**
**F-35 576 Cesson Sévigné (FR)**
• **CRIVELLI, Tomas**
**F-35 576 Cesson Sévigné (FR)**
• **CONZE, Pierre-Henri**
**F-35 576 Cesson Sévigné (FR)**
• **FRADET, Matthieu**
**F-35 576 Cesson Sévigné (FR)**
• **PEREZ, Patrick**
**F-35 576 Cesson Sévigné (FR)**

(74) Representative: **Vidon Brevets & Stratégie
16B, rue de Jouanet
B.P. 90333
Technopole Atalante
35703 Rennes Cedex 7 (FR)**

(56) References cited:
• **TOMAS CRIVELLI ET AL: "Multi-step flow fusion: towards accurate and dense correspondences in long video shots", PROCEEDINGS OF THE BRITISH MACHINE VISION CONFERENCE, 3 September 2012 (2012-09-03), pages 107.1-107.12, XP055059129, DOI: 10.5244/C.26.107 ISBN: 978-1-90-172546-9**
• **Tomas Crivelli ET AL: "Extended Abstract for Multi-step flow fusion: towards accurate and dense correspondences in long video shots", British Machine Vision Conference 2012, 3 September 2012 (2012-09-03), pages 1-1, XP055059132, DOI: 10.5244/C.26.107 Retrieved from the Internet: URL:http://dx.doi.org/10.5244/C.26.107 [retrieved on 2013-04-11]**
• **THOMAS BROX ET AL: "Object Segmentation by Long Term Analysis of Point Trajectories", 5 September 2010 (2010-09-05), COMPUTER VISION Â ECCV 2010, SPRINGER BERLIN HEIDELBERG, BERLIN, HEIDELBERG, PAGE(S) 282 - 295, XP019150629, ISBN: 978-3-642-15554-3 the whole document**

**Description**

The present invention relates generally to the field of dense point matching in a video sequence. More precisely, the invention relates to a method for filtering a displacement fields.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The problem of point and path tracking is a widely studied and still open issue with implications in a broad area of computer vision and image processing. On one side and among others, applications such as object tracking, structure from motion, motion clustering and segmentation, and scene classification may benefit from a set of point trajectories by analyzing an associated feature space. On the other side, applications related to video processing such as augmented reality, texture insertion, scene interpolation, view synthesis, video inpainting and 2D-to-3D conversion eventually require determining a dense set of trajectories or point correspondences that permit to propagate large amounts of information (color, disparity, depth, position, etc.) across the sequence. Dense instantaneous motion information is well represented by optical flow fields and points can be simply propagated through time by accumulation of the motion vectors, also called displacement vectors. That is why state-of-the-art methods as described by Brox and Malik in "Object segmentation by long term analysis of point trajectories" (Proc. ECCV, 2010) or by Sundaram, Brox and Keutzer in "Dense point trajectories by GPU-accelerated large displacement optical flow" (Proc. ECCV, 2010) have built on top of optical flow, methods for dense point tracking using such accumulation of motion vectors. Finally, such state-of-the art methods produce a motion field either based on a from-the-reference integration, for instance using Euler integration as disclosed by Sundaram, Brox and Keutzer in "Dense point trajectories by GPU-accelerated large displacement optical flow" (Proc. ECCV, 2010)) or a to-the-reference integration as disclosed in an international patent application PCT/EP13/050870 filed on January 17th, 2013 by the applicant.

The technical issue is how to combine both representations in order to efficiently exploit their respective benefits such as a better representation of spatio-temporal features of a point (or pixel) for a from-the-reference displacement field and accuracy of the estimation with to-the-reference displacement field.

The present invention provides such a solution.

SUMMARY OF INVENTION

The invention is directed to a method for filtering a displacement field between a first image and a second image, a displacement field comprising for each pixel of the first (reference) image a displacement vector to the second (current) image, the method comprising a first step of spatio-temporal filtering wherein a weighted sum of neighboring displacement vectors produces, for each pixel of the first image, a filtered displacement vector. The filtering step is remarkable in that a weight in the weighted sum is a trajectory weight where a trajectory weight is representative of a trajectory similarity. Advantageously, the first filtering step allows taking into account trajectory similarities between neighboring points.

According to an advantageous characteristic, a trajectory associated to a pixel of the first image comprises a plurality of displacement vectors from the pixel to a plurality of images. According to another advantageous characteristic, a trajectory weight comprises a distance between a trajectory from the pixel and a trajectory from a neighboring pixel.

In a first embodiment, the first step of spatio-temporal filtering comprises for each pixel of the first image :

- Determining a set of neighboring images around the second image ;
- Determining a set of neighboring pixels around the pixel of the first image ;
- Determining neighboring displacement vectors for each neighboring pixel, neighboring displacement vectors belonging to a displacement field between the first image and each image from the set of neighboring images ;
- Determining a weight for each neighboring displacement vector including a trajectory weight;
- Summing weighted neighboring displacement vectors producing a filtered displacement vector.

According to an advantageous characteristic, the set of neighboring images comprises images temporally placed between the first (reference) image and the second (current) image.

In a second embodiment, the first spatio-temporal filtering step is applied to a from-the-reference displacement field producing a filtered from-the-reference displacement field; and the method further comprises a second step of joint forward backward spatial filtering comprising a weighted sum of displacement vectors wherein the displacement vector belongs :

- either to a set of filtered from-the-reference displacement vectors between the first image and the second image for each neighboring pixel in the first image;
- or to a set of to-the-reference inverted displacement vectors for each neighboring pixel in the second image of an endpoint location resulting from a from-the-reference displacement vector for the pixel of the first image.

Advantageously in the second filtering step, backward displacement field is used to refine forward displacement field build by a from-the-reference integration. Advantageously the second step is applied on filtered from-the-reference displacement field. In a variant, the second step is applied on from-the-reference displacement field.

In a variant of the second embodiment, the method comprises a second step of joint forward backward spatial filtering comprising a weighted sum of displacement vectors wherein the displacement vector belongs :

- either to a set of to-the-reference displacement vectors between the second image and the first image for each neighboring pixel of the second image;
- or to a set of filtered from-the-reference inverted displacement vectors for each neighboring pixel in the first image of an endpoint location resulting from a to-the-reference displacement vector for the pixel of the second image.

In another variant of the second embodiment, the method comprises, after the second joint forward backward spatial filtering step, a third step of selecting a displacement vector between a previously filtered displacement vector and a current filtered displacement vector. This variant advantageously produces converging displacement fields.

In a third embodiment, the method comprises, before the first spatio-temporal filtering step a step of occlusion detection wherein a displacement vector for an occluded pixel is discarded in the first and/or second filtering steps.

In a refinement of the third embodiment, the 3 steps (spatio-temporal filtering, joint forward backward filtering, occlusion detection) are sequentially iterated for each displacement vector of successive second images belonging to a video sequence.

In a further refinement of the third embodiment, the steps are iterated for each inconsistent displacement vectors of successive second images belonging to the video sequence. In others words, once displacement vectors are filtered for a set of N images, the filtering is iterated only for inconsistent displacement vectors of the same set of N images. Advantageously, in this refinement, only bad displacement vectors (those for which the similarity of forward and backward displacement vectors are above a threshold) are processed in a second pass.

According to another aspect, the invention is directed to a graphics processing unit comprising means for executing code instructions for performing the method previously described.

According to another aspect, the invention is directed to a computer-readable medium storing computer-executable instructions performing all the steps of the method previously described when executed on a computer.

Any characteristic or variant embodiment described for the method is compatible with the device intended to process the disclosed method or the computer-readable medium.

BRIEF DESCRIPTION OF DRAWINGS

Preferred features of the present invention will now be described, by way of non-limiting example, with reference to the accompanying drawings, in which:

**Figure 1a** illustrates motion integration strategies through Euler integration method according to prior art;
**Figure 1b** illustrates motion integration strategies through inverse integration method according to an international patent application of the applicant;
**Figure 2a** illustrates estimated trajectories for rotational motion;
**Figure 2b** illustrates estimated trajectories for divergent motion;
**Figure 2c** illustrates estimated trajectories for zero motion;
**Figure 3a** illustrates position square error through time for rotational motion;
**Figure 3b** illustrates position square error through time for divergent motion;
**Figure 3c** illustrates position square error through time for zero motion;
**Figure 4a** illustrates from-the-reference correspondence point scheme;
**Figure 4b** illustrates to-the-reference correspondence point scheme;
**Figure 5** illustrates the steps of the method of filtering according to an embodiment of the invention;
**Figure 6** illustrates the steps of the method of filtering according to another embodiment of the invention;
**Figure 7** illustrates a device configured for implementing the method according to an embodiment of the invention; and

**Figure 8** illustrates the neighboring images and pixels for the filtering method.

DESCRIPTION OF EMBODIMENTS

In the following description, the term "motion vector" or "displacement vector" $d_{0,N}(x)$ comprises a data set which defines a displacement from a pixel x of a first frame $I_0$ to a corresponding location into a second frame $I_N$ of a video sequence and wherein indices 0 and N are numbers representative of the temporal frame position in the video sequence. An elementary motion field defines a motion field between 2 consecutives frames $I_N$ and $I_{N+1}$.

Respectively the terms "motion vector" or "displacement vector", "elementary motion vector" or "elementary displacement vector", "motion field" or "displacement field", "elementary motion field" or "elementary displacement field" are indifferently used in the following description.

A salient idea of the method for filtering a motion field or a set of motion fields for a video sequence is to introduce an information representative of trajectory similarity of spatial and temporal neighboring points in the filtering method.

Consider a sequence of images $\{I_n\}_{n:0\ldots N}$ where $I_n$: G → A is defined on the discrete rectangular grid G and A is the color space. Let $\boldsymbol{d}_{n,m} : \Omega \to \mathbb{R}^2$ be a displacement field defined on the continuous rectangular square $\Omega$, such that for every $\boldsymbol{x} \in \Omega$ it corresponds a displacement vector $\boldsymbol{d}_{n,m}(\boldsymbol{x}) \in \mathbb{R}^2$ for the ordered pair of images $\{I_n, I_m\}$. Furthermore, let us call $I_0$ the reference image. We pose the following problem: Given an input set of elementary optical flow fields $\mathbf{v_{n,n+1}}: G \to \mathbb{R}^2$ defined on the grid G, compute the displacement vectors $\mathbf{d}_{0,m}(\mathbf{x}) = \mathbf{d}_{0,m}(i,j) \ \forall$ m: 1 ... N, and for the grid position $\mathbf{x} = (i,j) \in$ G.

This is essentially the problem of determining the position of the initial point $(i,j)$ in $I_0$ at each subsequent frame, i.e. the trajectory of (i,j) from $I_0$ to $I_N$ or $\tau_{0:N}(i,j)$. The classical solution to this problem is to apply a simple Euler's integration method1 which is defined by the iteration

$$\boldsymbol{d}_{0,m+1}(i,j) = \boldsymbol{d}_{0,m}(i,j) + \boldsymbol{v}_{m,m+1}\left((i,j) + \boldsymbol{d}_{0,m}(i,j)\right) \quad (1)$$

from which the trajectory position in $I_{m+1}$ is given by $\boldsymbol{x}_{m+1} = (i,j) + \boldsymbol{d}_{0,m+1}(i,j)$ and $\boldsymbol{v}_{m,m+1}(\cdot)$ is probably an interpolated value at a non-grid location. Now, is this the best way of computing each displacement vector and hence the trajectory $\tau_{0:N}(i,j)$? In an ideal error-free world, yes. But...

We shall see how the unavoidable optical flow estimation inaccuracies lead to errors in the estimated displacements. Let us call $\boldsymbol{d}_{0,m+1}(i,j)$ the true displacement vector and $\hat{\boldsymbol{d}}_{0,m+1}(i,j)$ an estimation of it. Likewise we use the notation $\hat{\cdot}$ to indicate any estimated error-prone quantity. For a given iteration of (1) we can express the estimation error $\xi_{m+1} = \hat{\boldsymbol{d}}_{0,m+1}(i,j) - \boldsymbol{d}_{0,m+1}(i,j)$ as

$$\xi_{0,m+1} = \widehat{\boldsymbol{d}}_{0,m}(i,j) - \boldsymbol{d}_{0,m}(i,j) +$$

$$\widehat{\boldsymbol{v}}_{m,m+1}\left((i,j) + \widehat{\boldsymbol{d}}_{0,m}(i,j)\right) - \boldsymbol{v}_{m,m+1}\left((i,j) + \boldsymbol{d}_{0,m}(i,j)\right)$$

$$= \xi_{0,m} + \widehat{\boldsymbol{v}}_{m,m+1}\left(\boldsymbol{x}_m + \xi_{0,m}\right) - \boldsymbol{v}_{m,m+1}(\boldsymbol{x}_m)$$

$$= \xi_{0,m} + \boldsymbol{v}_{m,m+1}(\widehat{\boldsymbol{x}}_m) - \boldsymbol{v}_{m,m+1}(\boldsymbol{x}_m) + \boldsymbol{\delta}_{m,m+1}(\widehat{\boldsymbol{x}}_m) \quad (2)$$

with $\boldsymbol{x}_m = (i,j) + \boldsymbol{d}_{0,m}(i,j)$ and where $\delta_{m,m+1}(\cdot)$ accounts for the input optical flow estimation error such that $\hat{\boldsymbol{v}}_{m,m+1}(\boldsymbol{x}) = \hat{\boldsymbol{v}}_{m,m+1}(\boldsymbol{x}) + \delta_{m,m+1}(\boldsymbol{x})$. Here we distinguish three types of terms:

- An error propagation term $\xi_{0,m}$ which stands for the accumulation of displacement error along the trajectory.

- A noise term $\delta_{m,m+1}(\hat{\mathbf{x}}_m)$ which is an error inherent to the estimation of the instantaneous motion maps and is always present.

- A motion bias term $\mathbf{v}_{m,m+1}(\hat{\mathbf{x}}_m) - \mathbf{v}_{m,m+1}(\mathbf{x}_m)$, which reflects the bias in the current displacement computation given by the fact that the current estimated position is different (by $\xi_{0,m}$) from the true one.

The two first terms are inherent to the process of integration and elementary motion estimation and thus, they cannot be avoided nor neglected. On the other hand, it is interesting to analyze the motion bias term. We first define the *relative motion bias magnitude* as

$$B_{m,m+1}\left(\boldsymbol{x}_m, \boldsymbol{x}_m + \boldsymbol{\xi}_{0,m}\right) = \frac{\|v_{m,m+1}(x_m+\xi_{0,m})-v_{m,m+1}(x_m)\|}{\|v_{m,m+1}(x_m)\|} \leq \sup_{y\in\Omega} \frac{\|v_{m,m+1}(y)-v_{m,m+1}(x_m)\|}{\|v_{m,m+1}(x_m)\|} \quad (3)$$

Note that $\|\xi_{0,m}\|$ is in general an increasing value (as the position estimation error inevitably increases along the sequence) and thus this bound cannot be tightened. In other words, as $\|\xi_{0,m}\|$ is not bounded, the motion bias term can be arbitrarily large, only limited by the maximum flow difference between two (possibly distant) image points. This undesirable behavior is the cause of the ubiquitous position drift observed in dense optical-flow-based tracking algorithms, independently of the flow estimation precision. What equation (3) states is that even small errors introduced by $\delta_{m,m+1}$ may lead to an unbounded drift. How to radically reduce this drift is the concern of what follows.

Surprisingly, we can dramatically reduce the drift effect if we proceed differently while integrating the input optical flow fields. Consider the following iteration for computing $\boldsymbol{d}_{n,m}(i,j)$

$$\boldsymbol{d}_{n,m}(i,j) = \boldsymbol{v}_{n,n+1}(i,j) + \boldsymbol{d}_{n+1,m}\left((i,j) + \boldsymbol{v}_{n,n+1}(i,j)\right) \quad (4)$$

for $n = m - 1, \ldots, 0$, so that one pass for the index $n$ finally gives the displacement field $\boldsymbol{d}_{0,m}$. Let us discuss the differences between (1) and (4). Euler's method starts at the reference $I_0$ and performs the motion accumulation in the sense of motion providing a sequential integration. Meanwhile, what we call inverse integration starts from the target image $I_m$ and recursively computes the displacement fields back to the reference image, in a non-causal manner. Note that in (1) a previously estimated displacement value is accumulated with an interpolation of the elementary motion field, which introduces both an error due to the noisy field $\boldsymbol{v}_{m,m+1}$ itself and an error due to evaluating $\boldsymbol{v}_{m,m+1}$ at a position biased by the current accumulated drift. In (4), on the other side, an elementary flow vector is accumulated with an interpolation now of a previously estimated displacement value. However, the difference is that in this second case, the drift is limited to that introduced by $\boldsymbol{v}_{n,n+1}(i,j)$.

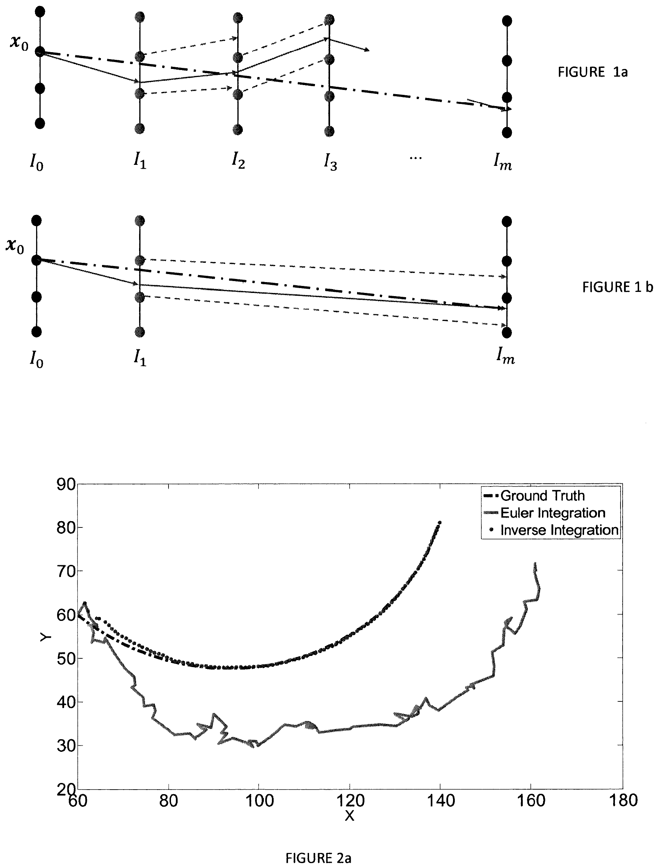

**Figure 1a** illustrates motion integration strategies through Euler integration method according to prior art. Euler integration method also called direct integration method performs the estimation by sequentially accumulating the motion vectors in the sense of the sequence, that is to say from the first image $I_0$ to last image $I_m$.

**Figure 1b** illustrates motion integration strategies through inverse integration method according to a method disclosed in an international patent application PCT/EP13/050870 filed on January 17th, 2013 by the applicant. The inverse integration performs the estimation recursively in the opposite sense from the last image to first image.

Effectively, for $n = 0$ we have

$$\boldsymbol{\xi}_{0,m} = \boldsymbol{\delta}_{0,1}(i,j) + \boldsymbol{d}_{1,m}\left((i,j) + \widehat{\boldsymbol{v}}_{0,1}(i,j)\right) + \boldsymbol{\xi}_{1,m}\left((i,j) + \widehat{\boldsymbol{v}}_{0,1}(i,j)\right) - \boldsymbol{d}_{1,m}\left((i,j) + \boldsymbol{v}_{0,1}(i,j)\right) \quad (5)$$

In this case, as $\delta_{0,1}(i,j)$ corresponds to the error term in the estimated optical flow $\widehat{v}_{0,1}(i,j)$, we can assume that $\|\delta_{0,1}(i,j)\|$ is kept small (it is not an increasing accumulated error as $\xi_{0,m}$ in (3) and thus for the motion bias we have

$$B_{0,m}\left(\boldsymbol{x}_1, \boldsymbol{x}_1 + \boldsymbol{\delta}_{0,1}(i,j)\right) = \frac{\|d_{1,m}(x_1+\delta_{0,1}(i,j))-d_{1,m}(x_1)\|}{\|d_{1,m}(x_1)\|} \leq \sup_{y\in\rho(x_1)} \frac{\|d_{1,m}(y)-d_{1,m}(x_1)\|}{\|d_{1,m}(x_1)\|} \quad (6)$$

with $\rho(\boldsymbol{x}_1)$ a ball of radius $\|\delta_{0,1}(i,j)\|$ centered at $\boldsymbol{x}_1 = (i,j)+\boldsymbol{v}_{0,1}(i,j)$. Assuming continuous displacement fields $\boldsymbol{d}_{n+1,N}$ and small elementary motion estimation error $\|\delta_{0,1}(i,j)\|$, $\|\boldsymbol{d}_{1,m}(\boldsymbol{y}) - \boldsymbol{d}_{1,m}(\boldsymbol{x}_1)\|$ is bounded as well as $B_{0,m}$.

We have attained a highly desirable property, by changing the way of integrating the same input optical flows: the bias introduced at each integration step does not diverge anymore.

We now analyze the behavior of the two integration methods in trajectory estimation, by studying the case of stationary affine motion models perturbed by zero-mean Gaussian noise. We assume elementary motion fields of the form $v_{m,m+1}(x) = Ax + b$ and the estimated fields are $v_{m,m+1}(x) = d_{m,m+1}(x_m) + r_m$ with $r_m \equiv \mathcal{N}(0, \sigma^2 \mathbf{I})$. The same input fields are used for estimating trajectories using both methods.

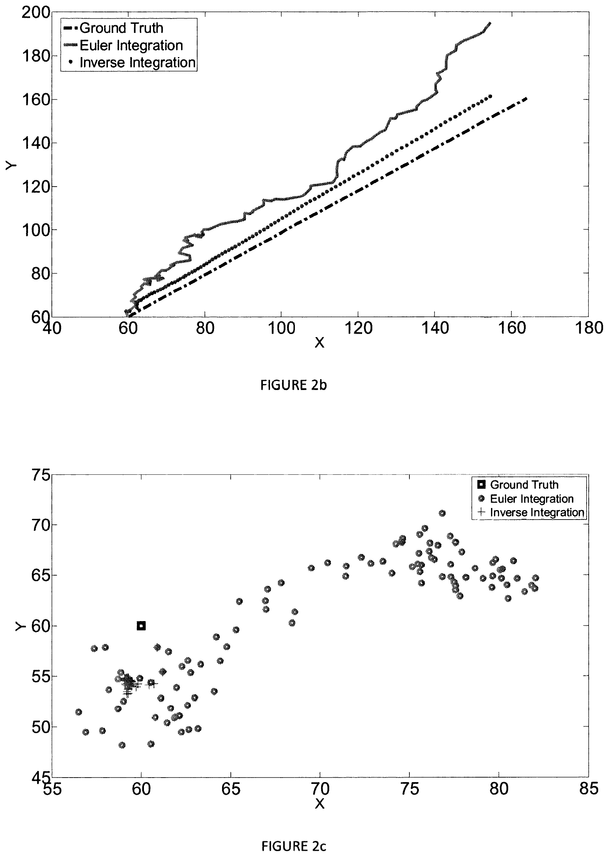

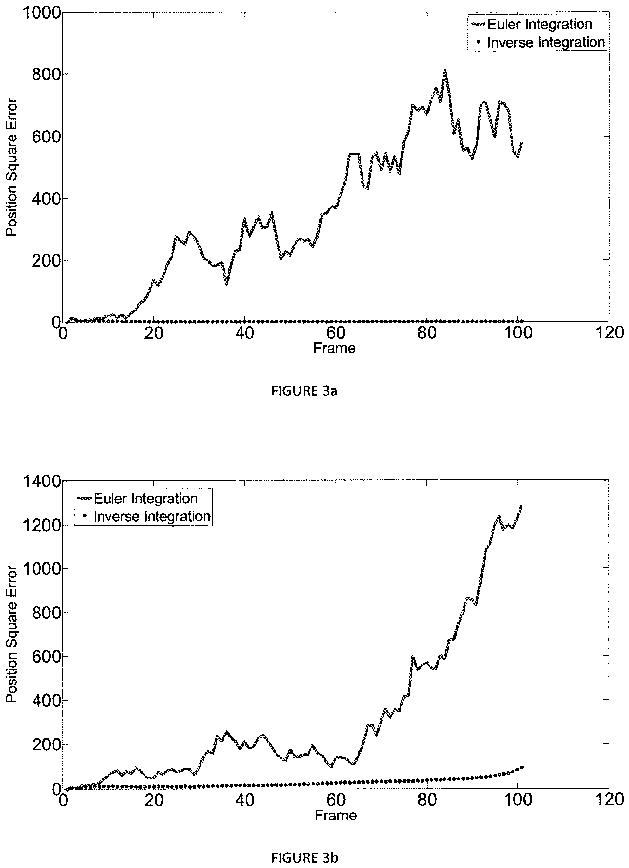

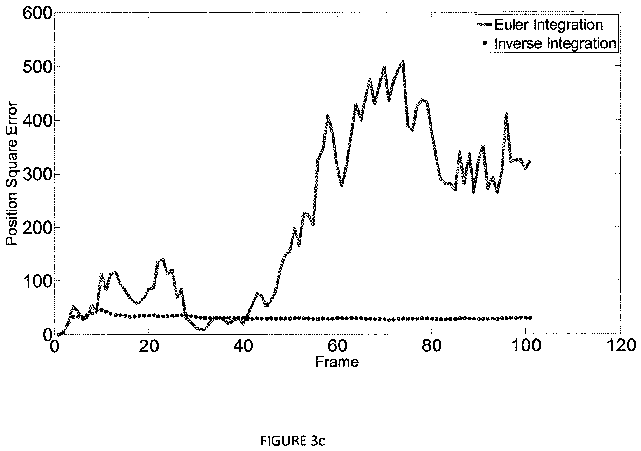

In the case of Euler's integration the application of equation (1) is straightforward, by iterating over m = 1 ... N. For the inverse integration method, equation (4) is repeated for each m: 1 *... N* and *n: m* - 1 ... 0, so as to obtain the series of displacement fields $d_{0,m}$. We have tested three different affine models: a rotational motion, a divergent motion and the zero motion. **Figures 2a, 2b, 2c** illustrates estimated trajectories for Euler's method and inverse method for noisy synthetic affine motion fields and **figures 3a, 3b, 3c** illustrates the results for Euler's method and inverse method. Results show significant improvements in the estimated positions for the inverse method. **Figure 2a** illustrates estimated trajectories for rotational motion for Euler's method (blue) and inverse method (green) with respect to ground truth (red). **Figure 2b** illustrates estimated trajectories for divergent motion for Euler's method (blue) and inverse method (green) with respect to ground truth (red). **Figure 2c** illustrates estimated trajectories for zero motion for Euler's method (blue) and inverse method (green) with respect to ground truth (red). All three different affine models being perturbed by noise of variance $\sigma^2 = 4$. **Figure 3a** illustrates position square error through time for rotational motion for Euler's method (blue) and inverse method (green). **Figure 3b** illustrates position square error through time for divergent motion for Euler's method (blue) and inverse method (green). **Figure 3c** illustrates position square error through time for zero motion for Euler's method (blue) and inverse method (green).

The behavior depicted by the simulations can be predicted by analyzing the stability of each integration method by recoursing to the theory of dynamical systems. For simplicity, let us consider $v_{m,m+1}(x) = Ax \ \forall m: 0 \ ... \ N - 1$. Then the true displacement fields are $d_{0,m+1}(x) = ((A + I)^{m+1} - I)x$ and for Euler's method $\xi_{0,m+1}(x_0)|_{Euler} = (A+I) \cdot \xi_{0,m}(x_0)|_{Euler} + r_m$ while for the inverse integration approach $\xi_{0,m+1}(x_0)|_{Inv} = (A + I)^m \cdot r_0 + \xi_{1,m+1}(x_1)|_{Inv}$. Essentially, Euler's method error equation is stable if all the eigenvalues $\lambda_i$ of $A$ lie inside the unit circle centered at -1 in the complex plane (i.e. $|1 + \lambda_i| < 1$), and possibly unstable (the error may diverge) otherwise. Meanwhile, the inverse approach defines a linear model with transition matrix equal to the identity and driven by the motion estimation errors $r_m$. Though it is not an asymptotically stable system around the zero-error equilibrium point (i.e. $\|\xi_{0,m+1}(x_0)|_{Inv}\| \to 0$ does not hold), it is always stable in the sense of Lyapunov (or just stable, loosely $\|\xi_{0,m+1}(x_0)|_{Inv}\| < \varepsilon$, for some $\varepsilon > 0$, $\forall m$). The error depends only on the accumulation of instantaneous motion estimation errors, but shows no unstable behavior. Concretely, a divergent field $(\mathcal{R}(\lambda_i) > 0)$, a rotational field ($|1 + \lambda_i| = 1$) or the zero-field ($\lambda_i = 0 \to |1 + \lambda_i| = 1$) are not well handled by the Euler method. For the case of the inverse method, we must emphasize that our analysis does not imply a zero-error or the absence of error accumulation, but a more robust dynamic behavior. Besides, it also appears that it implicitly performs a temporal filtering of the trajectory as observed in the figures.

Finally, in the general case of an arbitrary motion model, and thanks to the Grobman-Hartman theorem (known from C. Robinson in "Dynamical Systems: Stability, Symbolic Dynamics, and Chaos", Studies in Advanced Mathematics, CRC Press, 2nd edition 1998) we can study the behavior of both methods by regarding the linear approximations of (1) and (4) around an equilibrium point. This may lead to the problem of analyzing time-varying linear systems, for which it is not trivial to determine its stability properties. However we believe one can still obtain useful and analogous conclusions about the behavior of the error function by applying the theory of time-invariant systems.

Within the universe of dense point correspondence estimation we have distinguished two different scenarios, tightly bonded together but also to the concrete application one needs to deal with. Let us leave apart for an instant our concern about high accuracy displacement field estimation, and focus on the way we represent the information. Given a reference image, say $I_0$, we might want to determine either:

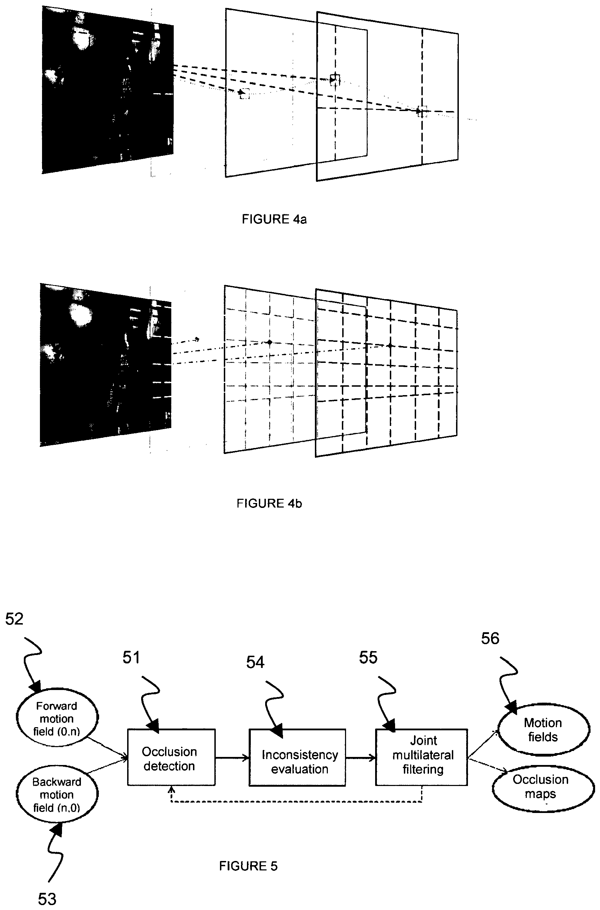

- From-the-reference correspondences, that is, for all the grid locations of the reference image we seek for their position at each frame of the sequence. This is equivalent to the point tracking problem which is a key component in applications such as object tracking, trajectory clustering, long term object segmentation, activity recognition etc. **Figure 4a** illustrates such from-the-reference correspondence point scheme wherein from-the-reference scheme corresponds to the problem of determining the position of each initial grid point in the reference frame, along the sequence, i.e. along the trajectories.

- To-the-reference correspondences, that is, for all grid locations of all the frames of the sequence, determine their position in the reference image. We call this the problem of point retrieving. Such representation is more suitable for problems related to propagating information present at a key-frame to the rest of the sequence. For example, graphic elements insertion, video inpainting, user-assisted video editing, disparity propagation, view synthesis, video volume segmentation. In this context, to-the-reference correspondences guarantee that every pixel of every frame is matched with the reference from which one retrieves the desired information. **Figure 4b** illustrates to-the-reference correspondence point scheme. To-the-reference corresponds to determining the position in the reference image of each grid point of each image of the sequence.

As illustrated on **figures 4a and 4b,** each of the mentioned scenarios has a natural representation in terms of displacements fields. Point tracking (from-the-reference) is compactly represented by $\boldsymbol{d}_{0,m}$ *(i, j)* $\forall m$: 1 ... N while for point retrieving (to-the-reference) it is more natural to deal with $\boldsymbol{d}_{n,0}$ *(i,j)* $\forall n$: N ... 1.

Now returning to the motion integration methods discussed above, one would ask which is the best option, not only in terms of accuracy, but also ease of implementation with regard to the reference (from or to), computational load, memory requirements and of course, concrete application-related issues.

Thus, from-the-reference scheme presents the following characteristics for each integration methods :

    o Unknown fields: $\mathbf{d}_{0,m}$ (i,j) $\forall m$: 1 ... N
    o Ease of implementation: Each iteration of Euler's integration equation naturally generates the trajectory in a sequential manner. Inverse integration needs one whole pass for each m.
    o Accuracy: Euler low, Inverse high
    o Computational load: Euler O(NP), Inverse $O(N^2P)$
    o Memory: Euler low, Inverse high

Thus to-the-reference scheme presents the following characteristics for each integration methods:

    o Unknown fields: $\mathbf{d}_{n,0}$ (i, j) $\forall n$: N ...1
    o Ease of implementation: Inverse method needs only one pass of the process. Euler's method need to initiate a trajectory for each point at each image of the sequence.
    ∘ Accuracy: Euler low, Inverse high
    o Computational load: Euler $O(N^2P)$, Inverse O(NP)
    o Memory: Euler low, Inverse medium

On the other side, a trajectory-based (from-the-reference) representation of point correspondences seems to be more natural for capturing spatio-temporal features of a point along the sequence as there is a direct (unambiguous) association between points and the path they follow. Consequently, refinement tasks as trajectory based filtering are easier to formulate. Meanwhile, to-the-reference fields do not directly provide such spatio-temporal information but can be efficiently and more accurately estimated. The question is then how to combine both representations which essentially can be formulated as how to pass from one representation to the other in order to efficiently exploit their benefits.

Considering the reference frame $I_0$ we call forward the from-the-reference displacements fields $\boldsymbol{d}_{0,n}$ and backward the to-the-reference displacement fields $\boldsymbol{d}_{n,0}$. The set of forward vectors $\boldsymbol{d}_{0,n}$ (x) that give the position of pixel x in the frames n describe its trajectory along the sequence. On the other hand, backward fields $\boldsymbol{d}_{n,0}$ have been estimated independently and carry consensual, complementary or contradictory information. Forward and backward displacement fields can be advantageously combined in particular to detect inconsistencies and occlusions (this is widely used in stereo vision and for example disclosed by G. Egnal and R. Wildes in "Detecting binocular half-occlusions: empirical comparisons of five approaches", PAMI, 24(8) 1127-1133, 2002). In addition, one can highlight the interest of combining both approaches in a refinement step as each one can constrain the other. In this section, both forward and backward displacement fields are combined in order to be mutually improved while taking into account the trajectory aspect.

**Figure 5** illustrates the iterative filtering processing according to an embodiment of the invention. The first step 51 is occlusion detection that identifies the vectors of pixels that have no correspondence in the other view. These vectors are then discarded in the filtering process. Inconsistency between forward and backward vector fields is then evaluated in the second step 54. Both forward and backward fields are then jointly updated via a multilateral filtering 55. All the pairs $\{I_0, I_n\}$ are processed similarly. The whole process is iterated up to fields stability.

Occlusions are detected and taken into account in the filtering process. For this sake, the forward 52 (respectively backward 53) displacement field at the reference frame $I_0$ (respectively, $I_n$) is used to detect occlusions at frame $I_n$ (respectively, $I_0$). The occlusion detection method (called OCC by Egnal) works as follows: addressing the detection of those pixels in frame $I_0$ that are occluded in frame $I_n$, one considers the displacement map $\tilde{d}_{n,0}(\boldsymbol{x})$ and scans the image $I_n$, to identify for each pixel via its displacement vector, the corresponding position in frame $I_0$. Then the closest pixel to this (probably) non-grid position in frame $I_0$ is marked as visible. At the end of this projection step, the pixels that are not marked in frame $I_0$ are classified as occluded in frame $I_n$.

Moreover, inconsistency value is evaluated between forward and backward displacement fields on the non-occluded pixels. It provides a way to identify unreliable vectors. After the first process iteration, the filtering is limited to the vectors which inconsistency value is above a threshold.

In the third step 55, for each frame pair $\{I_0, I_n\}$, forward and backward displacement fields $\boldsymbol{d}_{0,n}$ and $\boldsymbol{d}_{n,0}$ are jointly processed via multilateral filtering. Moreover, the "trajectory" aspect of the forward fields is considered via two ways. First, in addition to generally used weights, a trajectory similarity weight is introduced that replaces classical displacement similarity often introduced when two vectors are compared. Second, 2D filtering is extended to 2D+t along the trajectories.

Each updated vector 56 results from a weighted average of neighboring forward and backward vectors at frame pair $\{I_0, I_n\}$ and also forward vectors $\boldsymbol{d}_{0,m}$ ($m \in [n - \Delta, n + \Delta]$) at frame pairs $\{I_0, I_m\}$. Updated forward displacement vector $\tilde{d}_{0,n}(x)$ is obtained as follows:

$$\tilde{\boldsymbol{d}}_{0,n}(\boldsymbol{x}) = \frac{\sum_{m=n-\Delta}^{m=n+\Delta} \sum_{y \in \mathcal{F}_{\{x\}}} w_{traj}^{xy} w_{0,m}^{xy} d_{0,m}(\boldsymbol{y}) - \sum_{y \in \mathcal{F}_{\{z\}}} w_{n,0}^{zy} \boldsymbol{d}_{n,0}(\boldsymbol{y})}{\sum_{m=n-\Delta}^{m=n+\Delta} \sum_{y \in \mathcal{F}_{\{x\}}} w_{traj}^{xy} w_{0,m}^{xy} + \sum_{y \in \mathcal{F}_{\{z\}}} w_{n,0}^{zy}}$$

where $\mathcal{F}_{\{x\}}$ is a spatial window centered at x and $w_{0,m}^{xy}$ is a weight that links points $\boldsymbol{x}$ and $\boldsymbol{y}$ at frame $I_0$. Similarly, $\mathcal{F}_{\{z\}}$ is a spatial window centered at $z = \boldsymbol{x} + \boldsymbol{d}_{0,n}(\boldsymbol{x})$ and $w_{n,0}^{zy}$ is a weight that links points z and $\boldsymbol{y}$ at frame $I_n$. The weight $w_{s,t}^{uv}$ assigned to each displacement vector $\boldsymbol{d}_{s,t}(\boldsymbol{y})$ is defined as:

$$w_{s,t}^{uv} = \rho_{st} \times e^{-\gamma^{-1}\Gamma_{uv}^2 - \varphi^{-1}\Phi_{uv,s}^2 - \theta^{-1}\Theta_{v,st}^2} \qquad (7)$$

with:

$\Gamma_{uv}$ is the Euclidean distance between locations u and $\boldsymbol{v}$:

$$\Gamma_{\boldsymbol{uv}} = \|\boldsymbol{u} - \boldsymbol{v}\|_2 \qquad (8)$$

The *color similarity* $\Phi_{uv,s}$ between pixels $\boldsymbol{u}$ and $\boldsymbol{v}$ in $I_s$ is defined as follows:

$$\Phi_{\boldsymbol{uv,s}} = \sum_{c \in \{r,g,b\}} |I_s^c(\boldsymbol{u}) - I_s^c(\boldsymbol{v})|$$

The *matching cost* $\Theta_{v,st}$ is:

$$\Theta_{v,st} \equiv \Theta_{s,t}\left(\boldsymbol{v}, \boldsymbol{d}_{s,t}(\boldsymbol{v})\right) = \sum_{c \in \{r,g,b\}} \left| I_s^c(\boldsymbol{v}) - I_t^c\left(\boldsymbol{v} + \boldsymbol{d}_{s,t}(\boldsymbol{v})\right)\right| \qquad (9)$$

$\rho_{st}$ is a binary value that takes into account the occlusion detection as follows:

$$\rho_{st} = \begin{cases} 0 \ if \ pixel \ y \ at \ frame \ I_s \ is \ occluded \ in \ frame \ I_t \\ \qquad\qquad 1 \qquad\quad else \end{cases}$$

The weight $\mathcal{F}_{\{x\}}$ refers to the similarity measurement between the trajectories that support the two currently compared forward vectors. This trajectory similarity is defined as follows:

$$\Psi_{xy} = \sum_{m=n-\delta}^{m=n+\delta} \left\|\boldsymbol{d}_{0,m}(\boldsymbol{x}) - \boldsymbol{d}_{0,m}(\boldsymbol{y})\right\|_2$$

Similarly, updated backward displacement vector $\tilde{d}_{n,0}(x)$ is obtained as follows:

$$\widetilde{\boldsymbol{d}}_{n,0}(\boldsymbol{x}) = \frac{\sum_{y \in \mathcal{F}_{\{x\}}} w_{n,0}^{xy}\, \boldsymbol{d}_{n,0}(\boldsymbol{y}) - \sum_{m=n-\Delta}^{m=n+\Delta} \sum_{y \in \mathcal{F}_{\{z\}}} w_{traj}^{zy}\, w_{0,m}^{zy}\, d_{0,m}(\boldsymbol{y})}{\sum_{y \in \mathcal{F}_{\{x\}}} w_{n,0}^{xy} + \sum_{m=n-\Delta}^{m=n+\Delta} \sum_{y \in \mathcal{F}_{\{z\}}} w_{traj}^{zy}\, w_{0,m}^{zy}}$$

where $\mathcal{F}_{\{x\}}$ and $\mathcal{F}_{\{z\}}$ are windows defined respectively in frames $I_n$ around x and $I_0$ around z = $\boldsymbol{x}$ + $\boldsymbol{d}_{n,0}(\boldsymbol{x})$.

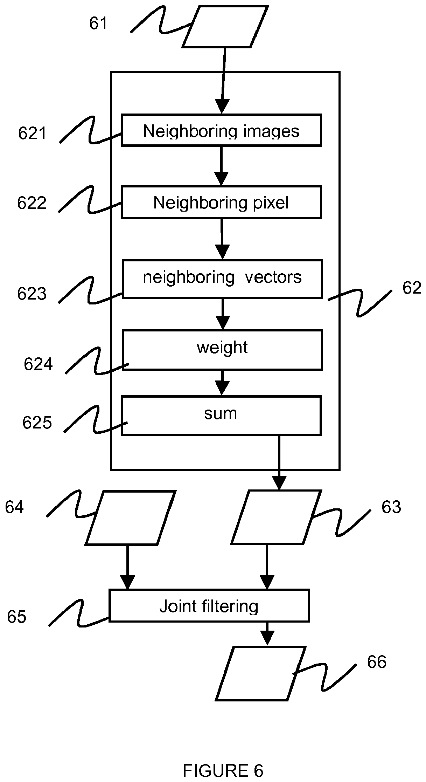

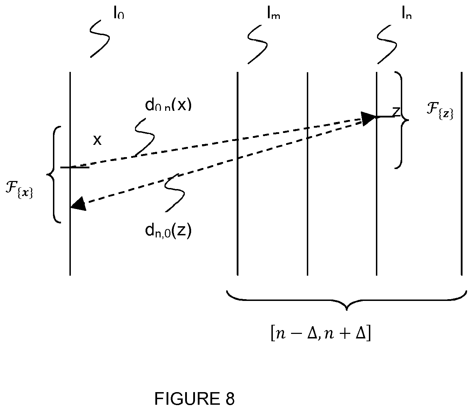

**Figure 6** represents a diagram illustrating the sequential steps of the filtering method according to an embodiment of the invention. An input set 61 of forward or from-the-reference displacement fields is provided at the initialisation of the method. A sequential loop is performed on images of the video sequence. In an advantageous embodiment, displacement field for consecutive images in the video sequence is generated for instance starting from the image $I_1$ adjacent to the reference image $I_0$ and following the order $I_0$, $I_1$, ...to $I_N$ for the from-the-reference variant. Thus filtered displacement vectors for intermediary images that are temporally placed between the reference image $I_0$ and the current image $I_N$ are available for the filtering of displacement vectors of the next image $I_{N+1}$. In a first step 62, filtering (preferentially in parallel) for each pixel X of the reference frame is performed in order to generate a motion field for the whole current image $I_N$. In this first filtering, as previously disclosed, a 2D filtering is extended along the trajectories by introducing temporal filtering. Thus, in a step 621, temporally neighboring images $I_m$ ($m \in [n - \Delta, n + \Delta]$) are determined while in a step 622 spatially neighboring pixel y from pixel x resulting in a spatial window $\mathcal{F}_{\{x\}}$ centered at x are determined. From this information, neighboring displacement vectors $\boldsymbol{d}_{0,m}(\boldsymbol{y})$ are determined from temporal and spatial window. **Figure 8** illustrates the neighboring images and pixels for the filtering method. Besides in this first filtering step 62 and as previously disclosed, a trajectory similarity weight $\mathcal{F}_{\{z\}}$ is introduced that replaces classical displacement similarity often introduced when two vectors are compared. This similarity weight is computed in a step 624 by computing a distance between a trajectory from the pixel x and a trajectory from the neighboring pixel y. Finally in a step 625, the weighted sum of neighboring displacement vectors is performed producing updated forward displacement vector $\tilde{d}_{0,n}(x)$ 63.

In a second filtering step 65, a joint filtering of backward and forward displacement vector is performed. In a first variant, filtered/updated forward displacement vectors $\tilde{d}_{0,n}(y)$ 63 and backward displacement vectors $d_{n,0}(y)$ 64 are processed to produce a filtered forward displacement vector $\tilde{d}_{0,n}(x)$ 66. In a second variant, filtered/updated forward displacement vectors $\tilde{d}_{0,n}(y)$ 63 and backward displacement vectors $d_{n,0}(y)$ 64 are processed to produce a filtered backward displacement vector $\tilde{d}_{n,0}(x)$ 66. The filtered from-the-reference displacement vectors $\tilde{\boldsymbol{d}}_{0,n}(\boldsymbol{y})$ 63 are considered for pixels y belonging to the spatial window $\mathcal{F}_{\{x\}}$ centered at x. While the to-the-reference displacement vectors $d_{n,0}(y)$ 64 are considered for pixels y belonging to the spatial window $\mathcal{F}_{\{z\}}$ centered at $\boldsymbol{z}$ = $\boldsymbol{x}$ + $\boldsymbol{d}_{0,n}(\boldsymbol{x})$ that is the endpoint location in the image $I_n$ resulting from from-the-reference displacement vector $d_{0,n}(\boldsymbol{x})$ for pixel x of $I_0$. **Figure 8** also illustrates the neighboring pixels y of pixel z for the joint backward forward filtering method. This second filtering step 65 produces a filtered motion vector, also noted $\tilde{\boldsymbol{d}}_{0,n}(\boldsymbol{x})$ (or $\tilde{d}_{n,0}(x)$ for the second variant) 66. In a refinement, the second filtering step 65 generates a filtered from-the-reference displacement field, and in a second pass the second filtering step 65 generates a filtered to-the-reference displacement field 66.

Once the filtering steps 62, 65 are processed, advantageously in parallel, for each pixel of current image, the spatio-temporal filtered motion field 66 is memorized. The filtered motion field is then a motion field available for the filtering of motion field of the next frame to be processed or for a second pass of the algorithm as disclosed in figure 5.

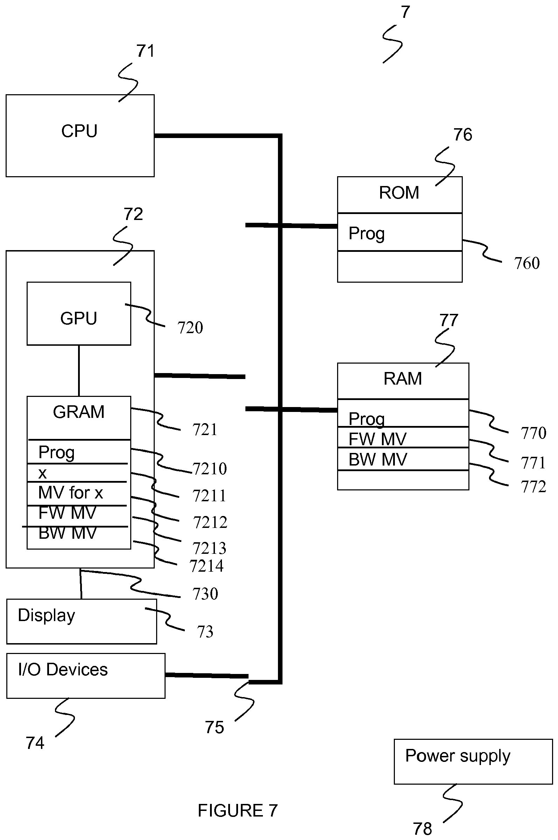

The skilled person will also appreciate that as the method can be implemented quite easily without the need for special equipment by devices such as PCs. According to different variant, features described for the method are being implemented in software module or in hardware module. **Figure 7** illustrates schematically a hardware embodiment of a device 7 adapted for generating motion fields. The device 7 corresponds for example to personal computer, to a laptop, to a game console or to any image processing unit. The device 7 comprises following elements, linked together by an address and data bus 75:

-    a microprocessor 71 (or CPU);
-    a graphical card 72 comprising:

  o several graphical processing units 720 (GPUs);
  o a graphical random access memory 721;

- a non volatile memory such as ROM (Read Only Memory) 76;
- a RAM (Random Access memory) 77;
- one or several Input/Output (I/O) devices 74, such as for example a keyboard, a mouse, a webcam, and so on;
- a power supply 78.

The device 7 also comprises a display device 73 such as a display screen directly connected to the graphical card 72 for notably displaying the rendering of images computed and composed in the graphical card for example by a video editing tool implementing the filtering according to the invention. According to a variant, the display device 73 is outside the device 7.

It is noted that the word "register" used in the description of memories 72, 76 and 77 designates in each of the memories mentioned, a memory zone of low capacity (some binary data) as well as a memory zone of large capacity (enabling a whole programme to be stored or all or part of the data representative of computed data or data to be displayed).

When powered up, the microprocessor 71 loads and runs the instructions of the algorithm comprised in RAM 77.

The memory RAM 57 comprises in particular:

- in a register 770, a "prog" program loaded at power up of the device 7;
- data 771 representative of the images of the video sequence and associated displacement fields.

Algorithms implementing the steps of the method of the invention are stored in memory GRAM 721 of the graphical card 72 associated to the device 7 implementing these steps. When powered up and once the data 771 representative of the video sequence have been loaded in RAM 77, GPUs 720 of the graphical card load these data in GRAM 721 and execute instructions of these algorithms under the form of micro-programs called "shaders" using HLSL language (High Level Shader Language), GLSL language (OpenGL Shading Language) for example.

The memory GRAM 721 comprises in particular:

- in a register 7210, data representative of spatial window $\mathcal{F}_{\{x\}}$ centered at x;
- displacement vectors for the spatial window $\mathcal{F}_{\{x\}}$ centered at x for temporal segment $[n - \Delta, n + \Delta]$ 7211;
- the similarity weight 5213 computed for each displacement vectors stored in 7212;
- Forward displacement vectors for the spatial window $\mathcal{F}_{\{x\}}$ centered at x 7213;
- Forward and backward displacement vectors for the spatial window $\mathcal{F}_{\{z\}}$ centered at z 7214.

According to a variant, the power supply is outside the device 7.

The invention as described in the preferred embodiments is advantageously computed using a Graphics processing unit (GPU) on a graphics processing board.

The invention is also therefore implemented preferentially as software code instructions and stored on a computer-readable medium such as a memory (flash, SDRAM...), said instructions being read by a graphics processing unit.

The foregoing description of the embodiments of the invention has been presented for the purposes of illustration and description. It is not intended to be exhaustive or to limit the invention to the precise form disclosed. Persons skilled in the relevant art can appreciate that many modifications and variations are possible in light of the above teaching. It is therefore intended that the scope of the invention is not limited by this detailed description, but rather by the claims appended hereto.

## Claims

1. A method for filtering a displacement field between a first image ($I_0$) and a second image ($I_n$), said displacement field comprising for each pixel (x) of said first image a displacement vector ($d_{0,n}(x)$) to the second image ($I_n$), said method comprising

   a) a first step (62, 55) of spatio-temporal filtering by computing a weighted sum of neighboring displacement vectors ($d_{o,m}(y)$) producing, for each pixel (x) of said first image, a filtered displacement vector ($\tilde{d}_{0,n}(x)$, 63); wherein each of said neighboring displacement vectors ($d_{0,m}(y)$) is determined for a corresponding neighboring pixel (y) from a set of neighboring pixels of said pixel (x) of said first image; and wherein a weight in said weighted sum is a trajectory weight, said trajectory weight being representative of a trajectory similarity, wherein for each pixel (x) the trajectory associated to said pixel (x) of said first image ($I_0$) comprises a plurality of displacement vectors ($d_{0,m}(x)$) from said pixel (x) to a plurality of images ($I_m$) such as to describe said pixel's (x) trajectory along said images ($I_m$) and wherein for each said neighboring pixel (y) said trajectory similarity results from a distance between the trajectory from said pixel (x) and the trajectory from said neighboring pixel (y).

2. The method for filtering according to claim 1,
   wherein said first step of spatio-temporal filtering further comprises for each pixel (x) of said first image :

   • Determining (621) a set of neighboring images ($[I_{n-\Delta}, I_{n+\Delta}]$) around said second image ($I_n$);

   • Determining (622) said set of neighboring pixels ($\mathcal{F}\{x\}$) around said pixel (x) of said first image ($I_0$);

   • Determining (623) said neighboring displacement vectors ($d_{0,m}(y)$) for each said neighboring pixel (y), said neighboring displacement vectors belonging to a displacement field between said first image ($I_0$) and each image ($I_m$) from said set of neighboring images ($\{I_{n-\Delta}, ..., I_{n+\Delta}\}$);
   • Determining (624) a weight for each neighboring displacement vector ($d_{o,m}(y)$);
   • Summing (625) weighted neighboring displacement vectors producing a filtered displacement vector ($\tilde{d}_{0,n}(x)$, 63).

3. The method according to claim 2 wherein said determined set of neighboring images comprises images temporally placed between said first image ($I_o$) and said second image ($I_n$).

4. The method for filtering according to any of claims 1 to 3 wherein said first spatio-temporal filtering step is applied to a from-the-reference displacement field producing a filtered from-the-reference displacement field; and further comprising

   b) a second step (65) of joint forward backward spatial filtering comprising a weighted sum of displacement vectors wherein said displacement vector belongs :

   either to a set of filtered from-the-reference displacement vectors ($\tilde{d}_{0,n}(y)$) between said first image and said second image for each neighboring pixel (y) of said pixel (x);
   or to a set of to-the-reference inverted displacement vectors ($d_{n,0}(z)$) for each neighboring pixel (z) in said second image of an endpoint location resulting from a from-the-reference displacement vector ($\tilde{d}_{0,n}(x)$) for pixel (x) of said first image.

5. The method for filtering according to any of claims 1 to 4 further comprising b) a second step (65) of joint forward backward spatial filtering comprising a weighted sum of displacement vectors wherein said displacement vector belongs :

   either to a set of to-the-reference displacement vectors ($d_{n,0}(y)$) between said second image and said first image for each neighboring pixel (y) of said pixel (x);
   or to a set of filtered from-the-reference inverted displacement vectors ($\tilde{d}_{0,n}(z)$) for each neighboring pixel (z) in said first image of an endpoint location resulting from a to-the-reference displacement vector ($d_{n,0}(x)$) for pixel (x) of said second image.

6. The method according to any of claims 1 to 5 further comprising after said second joint forward backward spatial filtering step :

   c) a third step of selecting a displacement vector between a previously filtered displacement vector and a current filtered displacement vector.

7. The method according to any of claim 1 to 6 further comprising before said first spatio-temporal filtering step :

   d) A step of occlusion detection (51) wherein a displacement vector for an occluded pixel is discarded in the first and second filtering steps (55).

8. The method according to claim 7 wherein steps are sequentially iterated for each displacement vector of successive second images belonging to a video sequence.

9. The method according to claim 8 wherein steps are further iterated for each inconsistent displacement vectors of successive second images belonging to said video sequence.

10. A graphics processing unit (72) comprising means for executing code instructions, said graphics processing unit (72) being adapted to perform the method according to any of the previous claims.

11. A computer-readable medium storing computer-executable instructions performing the method according to any of claims 1 to 9 when executed on a computer.

**Patentansprüche**

1. Verfahren zum Filtern eines Verschiebungsfelds zwischen einem ersten Bild ($I_0$) und einem zweiten Bild ($I_n$), wobei das Verschiebungsfeld für jedes Pixel (x) des ersten Bilds einen Verschiebungsvektor ($d_{0,n}(x)$) zu dem zweiten Bild ($I_n$) umfasst, wobei das Verfahren umfasst:

a) einen ersten Schritt (62, 55) des räumlich-zeitlichen Filterns durch Berechnen einer gewichteten Summe von Nachbarverschiebungsvektoren ($d_{0,m}(y)$), die für jedes Pixel (x) des ersten Bilds einen gefilterten Verschiebungsvektor ($\tilde{d}_{0,n}(\mathbf{x})$, 63) erzeugt;
wobei jeder der Nachbarverschiebungsvektoren ($d_{0,m}(y)$) für ein bestimmtes Nachbarpixel (y) aus einer Menge von Nachbarpixeln des Pixels (x) des ersten Bilds bestimmt wird;
und wobei eine Gewichtung in der gewichteten Summe eine Trajektoriengewichtung ist, wobei die Trajektoriengewichtung eine Trajektorienähnlichkeit repräsentiert, wobei die dem Pixel (x) des ersten Bilds ($I_0$) zugeordnete Trajektorie für jedes Pixel (x) mehrere Verschiebungsvektoren ($d_{0,m}(x)$) von dem Pixel (x) zu mehreren Bildern ($I_m$) umfasst, um die Trajektorie des Pixels (x) entlang der Bilder ($I_m$) zu beschreiben, und wobei sich die Trajektorienähnlichkeit für jedes Nachbarpixel (y) aus einer Entfernung zwischen der Trajektorie von dem Pixel (x) und der Trajektorie von dem Nachbarpixel (y) ergibt.

2. Verfahren zum Filtern nach Anspruch 1, wobei der erste Schritt der räumlich-zeitlichen Filterung ferner für jedes Pixel (x) des ersten Bilds umfasst:

• Bestimmen (621) einer Menge von Nachbarbildern ($[I_{n-\Delta}, I_{n+\Delta}]$) um das zweite Bild ($I_n$);

• Bestimmen (622) der Menge von Nachbarpixeln ($\mathcal{F}_{(x)}$) um das Pixel (x) des ersten Bilds ($I_0$);

• Bestimmen (623) der Nachbarverschiebungsvektoren ($d_{0,m}(y)$) für jedes der Nachbarpixel (y), wobei die Nachbarverschiebungsvektoren zu einem Verschiebungsfeld zwischen dem ersten Bild ($I_0$) und jedem Bild ($I_m$) aus der Menge von Nachbarbildern ($\{I_{n-\Delta}, \ldots, I_{n+\Delta}\}$) gehören;

• Bestimmen (624) einer Gewichtung für jeden Nachbarverschiebungsvektor ($d_{0,m}(y)$);

• Summieren (625) gewichteter Nachbarverschiebungsvektoren, die einen gefilterten Verschiebungsvektor ($\tilde{d}_{0,n}(\mathbf{x})$, 63) erzeugen.

3. Verfahren nach Anspruch 2, wobei die bestimmte Menge von Nachbarbildern Bilder umfasst, die zeitlich zwischen dem ersten Bild ($I_0$) und dem zweiten Bild ($I_n$) angeordnet sind.

4. Verfahren zum Filtern nach einem der Ansprüche 1 bis 3,
wobei der erste Schritt der räumlich-zeitlichen Filterung auf ein Verschiebungsfeld von der Referenz angewendet wird, wobei er ein gefiltertes Verschiebungsfeld von der Referenz erzeugt; und wobei das Verfahren ferner umfasst:

b) einen zweiten Schritt (65) der gemeinsamen räumlichen Vorwärts-Rückwärts-Filterung, die eine gewichtete Summe von Verschiebungsvektoren umfasst, wobei die Verschiebungsvektoren gehören:

entweder zu einer Menge gefilterter Verschiebungsvektoren ($\tilde{d}_{0,n}(\mathbf{y})$) von der Referenz zwischen dem ersten Bild und dem zweiten Bild für jedes Nachbarpixel (y) des Pixels (x);
oder zu einer Menge invertierter Verschiebungsvektoren ($d_{n,0}(z)$) zu der Referenz für jedes Nachbarpixel (z) in dem zweiten Bild eines Endpunktorts, der sich aus einem Verschiebungsvektor ($\tilde{d}_{0,n}(\mathbf{x})$) von der Referenz für das Pixel (x) des ersten Bilds ergibt.

5. Verfahren zum Filtern nach einem der Ansprüche 1 bis 4, wobei das Verfahren ferner umfasst:

b) einen zweiten Schritt (65) der gemeinsamen räumlichen Vorwärts-Rückwärts-Filterung, die eine gewichtete Summe von Verschiebungsvektoren umfasst, wobei der Verschiebungsvektor gehört:

entweder zu einer Menge von Verschiebungsvektoren ($d_{n,0}$(**y**)) zu der Referenz zwischen dem zweiten Bild und dem ersten Bild für jedes Nachbarpixel (y) des Pixels (x);

oder zu einer Menge gefilterter invertierter Verschiebungsvektoren ($\tilde{d}_{0,n}$(**z**)) von der Referenz für jedes Nachbarpixel (z) in dem ersten Bild eines Endpunktorts, der sich aus einem Verschiebungsvektor ($d_{n,0}$(x)) zu der Referenz für das Pixel (x) des zweiten Bilds ergibt.

6. Verfahren nach einem der Ansprüche 1 bis 5, das ferner nach dem zweiten Schritt der gemeinsamen räumlichen Vorwärts-Rückwärts-Filterung umfasst:

c) einen dritten Schritt des Auswählens eines Verschiebungsvektors zwischen einem zuvor gefilterten Verschiebungsvektor und einem gegenwärtigen gefilterten Verschiebungsvektor.

7. Verfahren nach einem der Ansprüche 1 bis 6, das ferner vor dem ersten Schritt der räumlich-zeitlichen Filterung umfasst:

d) einen Schritt der Verdeckungsdetektion (51), wobei ein Verschiebungsvektor für ein verdecktes Pixel in dem ersten und in dem zweiten Filterungsschritt (55) verworfen wird.

8. Verfahren nach Anspruch 7, wobei die Schritte für jeden Verschiebungsvektor aufeinanderfolgender zweiter Bilder, die zu einer Videofolge gehören, sequentiell iteriert werden.

9. Verfahren nach Anspruch 8, wobei die Schritte ferner für alle inkonsistenten Verschiebungsvektoren aufeinanderfolgender zweiter Bilder, die zu der Videosequenz gehören, iteriert werden.

10. Graphikverarbeitungseinheit (72), die Mittel zum Ausführen von Codeanweisungen umfasst, wobei die Graphikverarbeitungseinheit (72) dafür ausgelegt ist, das Verfahren nach einem der vorhergehenden Ansprüche auszuführen.

11. Computerlesbares Medium, das durch einen Computer ausführbare Anweisungen speichert, die das Verfahren nach einem der Ansprüche 1 bis 9 ausführen, wenn sie auf einem Computer ausgeführt werden.

## Revendications

1. Procédé de filtrage d'un champ de déplacement entre une première image ($I_0$) et une seconde image ($I_n$), ledit champ de déplacement comprenant pour chaque pixel (x) de ladite première image un vecteur de déplacement ($d_{0,n}$(x)) vers la seconde image ($I_n$), ledit procédé comprenant

a) une première étape (62, 55) de filtrage spatiotemporel via le calcul d'une somme pondérée de vecteurs de déplacement voisins ($d_{0,m}$(y)) produisant, pour chaque pixel (x) de ladite première image, un vecteur de déplacement filtré ($\tilde{d}_{0,n}$(**x**),63);

dans lequel chacun desdits vecteurs de déplacement voisins ($d_{0,m}$(y)) est déterminé pour un pixel voisin correspondant (y) à partir d'un ensemble de pixels voisins dudit pixel (x) de ladite première image ; et dans lequel un poids présent dans ladite somme pondérée est un poids de trajectoire, ledit poids de trajectoire étant représentatif d'une ressemblance entre trajectoires, dans lequel pour chaque pixel (x) la trajectoire associée audit pixel (x) de ladite première image ($I_0$) comprend une pluralité de vecteurs de déplacement ($d_{0,m}$(x)) dudit pixel (x) vers une pluralité d'images ($I_m$) de manière à décrire la trajectoire dudit pixel (x) le long desdites images ($I_m$) et dans lequel pour chacun desdits pixels voisins (y), ladite ressemblance entre trajectoires résulte d'une distance entre la trajectoire partant dudit pixel (x) et la trajectoire partant dudit pixel voisin (y).

2. Procédé de filtrage selon la revendication 1, dans lequel ladite première étape de filtrage spatiotemporel comprend en outre pour chaque pixel (x) de ladite première image :

- la détermination (621) d'un ensemble d'images voisines ($[I_{n-\Delta}, I_{n+\Delta}]$) autour de ladite seconde image ($I_n$);

- la détermination (622) dudit ensemble de pixels voisins ($\mathcal{F}_{(x)}$)) autour dudit pixel (x) de ladite première image ($I_0$);

- la détermination (623) desdits vecteurs de déplacement voisins ($d_{0,m}$(y)) pour chacun desdits pixels voisins (y), lesdits vecteurs de déplacement voisins appartenant à un champ de déplacement entre ladite première

image ($I_0$) et chaque image ($I_m$) dudit ensemble d'images voisines ($\{I_{n-\Delta}, ..., I_{n+\Delta'}\}$);
- la détermination (624) d'un poids pour chaque vecteur de déplacement voisin ($d_{0,m}(y)$);
- le calcul d'une somme pondérée (625) de vecteurs de déplacement voisins produisant un vecteur de déplacement filtré ($\tilde{\mathbf{d}}_{0,n}(\mathbf{x})$, 63).

3. Procédé selon la revendication 2, dans lequel ledit ensemble déterminé d'images voisines comprend des images placées temporellement entre ladite première image ($I_0$) et ladite seconde image ($I_n$).

4. Procédé de filtrage selon l'une des revendications 1 à 3, dans lequel ladite première étape de filtrage spatiotemporel est appliquée à un champ de déplacement depuis la référence produisant un champ de déplacement depuis la référence filtré; et comprenant en outre

   b) une deuxième étape (65) de filtrage spatial avant/arrière combiné comprenant une somme pondérée de vecteurs de déplacement dans laquelle ledit vecteur de déplacement appartient :

   soit à un ensemble de vecteurs de déplacement depuis la référence filtrés ($\tilde{\mathbf{d}}_{0,n}(\mathbf{y})$) entre ladite première image et ladite seconde image pour chaque pixel voisin (y) dudit pixel (x) ;
   soit à un ensemble de vecteurs de déplacement inversé vers la référence ($d_{n,o}(z)$) pour chaque pixel voisin (z) dans ladite seconde image d'un emplacement de point final résultant d'un vecteur de déplacement depuis la référence ($\tilde{\mathbf{d}}_{0,n}(\mathbf{x})$) pour le pixel (x) de ladite première image.

5. Procédé de filtrage selon l'une des revendications 1 à 4, comprenant en outre

   b) une deuxième étape (65) de filtrage spatial avant/arrière combiné comprenant une somme pondérée de vecteurs de déplacement dans laquelle ledit vecteur de déplacement appartient :

   soit à un ensemble de vecteurs de déplacement vers la référence ($d_{n,0}(y)$) entre ladite seconde image et ladite première image pour chaque pixel voisin (y) dudit pixel (x) ;
   soit à un ensemble de vecteurs de déplacement inversé depuis la référence filtrés ($\tilde{\mathbf{d}}_{0,n}(\mathbf{z})$) pour chaque pixel voisin (z) dans ladite première image d'un emplacement de point final résultant d'un vecteur de déplacement vers la référence ($d_{n,0}(x)$) pour le pixel (x) de ladite seconde image.

6. Procédé selon l'une des revendications 1 à 5, comprenant en outre après ladite deuxième étape de filtrage spatial avant/arrière combiné :

   c) une troisième étape de sélection d'un vecteur de déplacement entre un vecteur de déplacement préalablement filtré et un vecteur de déplacement filtré courant.

7. Procédé selon l'une des revendications 1 à 6, comprenant en outre avant ladite première étape de filtrage spatiotemporel :

   d) une étape de détection des occlusions (51) dans laquelle un vecteur de déplacement pour un pixel occlus est rejeté dans la première et la deuxième étape de filtrage (55).

8. Procédé selon la revendication 7, dans lequel les étapes sont répétées de façon séquentielle pour chaque vecteur de déplacement des secondes images successives appartenant à une séquence vidéo.

9. Procédé selon la revendication 8, dans lequel les étapes sont en outre répétées pour chaque vecteur de déplacement incohérent des secondes images successives appartenant à ladite séquence vidéo.

10. Unité de traitement graphique (72) comprenant des moyens d'exécuter des instructions de code, ladite unité de traitement graphique (72) étant adaptée pour mettre en oeuvre le procédé selon l'une quelconque des revendications précédentes.

11. Support de stockage lisible sur ordinateur comprenant des instructions exécutables par un ordinateur pour mettre en oeuvre le procédé selon l'une quelconque des revendications 1 à 9 lorsqu'elles sont exécutées sur un ordinateur.

$x_0$

$I_0$ $I_1$ $I_2$ $I_3$ $\cdots$ $I_m$

FIGURE 1a

$x_0$

$I_0$ $I_1$ $I_m$

FIGURE 1 b

- - Ground Truth
—— Euler Integration
• Inverse Integration

FIGURE 2a

FIGURE 2b

FIGURE 2c

FIGURE 3a

FIGURE 3b

FIGURE 3c

FIGURE 4a

FIGURE 4b

FIGURE 5

61

621 — Neighboring images

622 — Neighboring pixel

623 — neighboring  vectors

62

624 — weight

625 — sum

64

63

65 — Joint filtering

66

FIGURE 6

71

CPU

72

GPU      720

GRAM     721

Prog     7210
x        7211
MV for x 7212
FW MV    7213
BW MV    7214

730

Display  73

I/O Devices

74       75

7

76

ROM

Prog     760

77

RAM

Prog     770
FW MV    771
BW MV    772

Power supply

78

FIGURE 7

FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 13050870 W

### Non-patent literature cited in the description

- **BROX ; MALIK.** Object segmentation by long term analysis of point trajectories. *Proc. ECCV,* 2010
- **SUNDARAM ; BROX ; KEUTZER.** Dense point trajectories by GPU-accelerated large displacement optical flow. *Proc. ECCV,* 2010
- Dynamical Systems: Stability, Symbolic Dynamics, and Chaos. **C. ROBINSON.** Studies in Advanced Mathematics. CRC Press, 1998
- **G. EGNAL ; R. WILDES.** Detecting binocular half-occlusions: empirical comparisons of five approaches. *PAMI,* 2002, vol. 24 (8), 1127-1133